# EUROPEAN PATENT SPECIFICATION

(11) **EP 3 928 075 B1**
(45) Date of publication and mention of the grant of the patent: **03.04.2024**
(21) Application number: 20706834.7
(22) Date of filing: 11.02.2020
(51) Int. Cl.: G01N 30/08, G01N 30/60, G01N 1/40, G01N 30/20

(54) **MINIATURIZED SYSTEM FOR THE PRE-CONCENTRATION AND SUBSEQUENT GAS-CHROMATOGRAPHIC SEPARATION OF SAMPLE MIXTURES AND CORRESPONDING GAS-CHROMATOGRAPHY ANALYSIS METHOD**
MINIATURISIERTES SYSTEM ZUR VORKONZENTRIERUNG UND ANSCHLIESSENDEN GASCHROMATOGRAFISCHEN TRENNUNG VON PROBENGEMISCHEN UND ENTSPRECHENDES GASCHROMATOGRAPHES ANALYSEVERFAHREN
SYSTÈME MINIATURISÉ POUR LA PRÉCONCENTRATION ET LA SÉPARATION PAR CHROMATOGRAPHIE EN PHASE GAZEUSE ULTÉRIEURE DE MÉLANGES D'ÉCHANTILLONS ET MÉTHODE CORRESPONDANTE D'ANALYSE PAR CHROMATOGRAPHIE EN PHASE GAZEUSE

(30) Priority: 21.02.2019 IT 201900002519
(43) Date of publication of application: 29.12.2021
(73) Proprietor: Consiglio Nazionale Delle Ricerche, 00185 Roma (IT)
(72) Inventor: ZAMPOLLI, Stefano, 00185 Roma (IT); ELMI, Ivan, 00185 Roma (IT); MASINI, Luca, 00185 Roma (IT); CARDINALI, Gian Carlo, 00185 Roma (IT); ZARDI, Federico, 00185 Roma (IT)
(74) Representative: Perronace, Andrea
(86) International application number: PCT/IB2020/051046
(87) International publication number: WO 2020/170070

(56) References cited:
- US-A1- 2018 164 260
- TZENG TE-HSUEN ET AL: "A Portable Micro Gas Chromatography System for Lung Cancer Associated Volatile Organic Compound Detection", IEEE JOURNAL OF SOLID-STATE CIRCUITS, IEEE SERVICE CENTER, PISCATAWAY, NJ, USA, vol. 51, no. 1, 1 January 2016 (2016-01-01), pages 259-272, XP011596423, ISSN: 0018-9200, DOI: 10.1109/JSSC.2015.2489839 [retrieved on 2015-12-30]
- BYUNGHOON BAE ET AL: "A Fully-Integrated MEMS Preconcentrator for Rapid Gas Sampling", SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10 June 2007 (2007-06-10), pages 1497-1500, XP031216328, ISBN: 978-1-4244-0841-2
- RONALD P MANGINELL ET AL: "Mass-Sensitive Microfabricated Chemical Preconcentrator", JOURNAL OF MICROELECTROMECHANICAL SYSTEMS, IEEE SERVICE CENTER, US, vol. 17, no. 6, 1 December 2008 (2008-12-01), pages 1396-1407, XP011236768, ISSN: 1057-7157, DOI: 10.1109/JMEMS.2008.2004983
- JUNGHOON YEOM ET AL: "The design, fabrication and characterization of a silicon microheater for an integrated MEMS gas preconcentrator", JOURNAL OF MICROMECHANICS & MICROENGINEERING, INSTITUTE OF PHYSICS PUBLISHING, BRISTOL, GB, vol. 18, no. 12, 1 December 2008 (2008-12-01), page 125001, XP020145054, ISSN: 0960-1317, DOI: 10.1088/0960-1317/18/12/125001
- CHIA-JUNG LU ET AL: "First-generation hybrid MEMS gas chromatograph", LAB ON A CHIP, vol. 5, no. 10, 1 January 2005 (2005-01-01), page 1123, XP055689971, ISSN: 1473-0197, DOI: 10.1039/b508596a

## Description

The present invention is in the field of systems for the pre-concentration and the subsequent (gas-)chromatography separation of sample mixtures.

### State of the art

There exist "purge & trap" preconcentration systems, used to increase the concentration of a sample before injecting it into a gas-chromatography column (GC) for the separation and detection of the analytes contained therein. These are implemented almost exclusively in laboratory measuring systems and generally consist of tubes (metal or glass) filled with specific absorbent materials which, at room temperature or cooled, retain the molecules of interest (analytes) from the sample flow. This sampling and preconcentration step may also be long (tens of minutes) in order to absorb a large amount of sample. When enough sample has been collected, heat is generally applied to the tube (and thus to the absorbent material contained) which releases the trapped molecules (thermal desorption) into a carrier gas flow. One endeavors to carry out this release as quickly as possible in order to release the absorbed molecules into as small a volume of carrier gas as possible, thereby increasing the concentration of the sample.

For example, a preconcentrator samples 10 liters of air within a few minutes, and then releases the absorbed air within a volume of only 100 milliliters. The concentration factor is ideally 100x.

However, it is generally difficult to heat the preconcentration tubes very quickly (it involves bringing them up to 350°C in a few seconds): in order to heat the conventional tubes it is necessary to dissipate a considerable electrical power.

In bench/laboratory GC systems, which today use purge & trap preconcentration systems such as those described above, the injection circuit is generally made with mechanical valves of considerable size and complexity, which may however boast excellent features of reliability and robustness, even at high temperatures ([1], see below).

On the other hand, there are MEMS (on-chip) injection systems for gas-chromatography, also called micro-gas-chromatography (µGC), based on diaphragm valves made of polymeric materials (usually Kapton) implemented under pressure (e.g. MEMS injectors [2]). The advantages of such injector types are that:
1) they implement a very low dead volume injection circuit; and
2) they may be easily heated to temperatures up to over 200°C, an important feature to avoid the condensation of heavy/high-boiling molecules.

To the Inventors' knowledge, all GC MEMS injectors today implement the injection of a sample loop and not of a preconcentrator, i.e. they inject a known and controlled volume of gaseous sample, such as taken directly from the environment to be analyzed. This means that the concentration of the injected molecules is equal to the concentration in the environment (and not higher, as in the case of the preconcentration illustrated above and achieved with totally different technology).

The Applicant (IMM institute of the National Research Council of Italy) has in the past developed and published a "mini-GC" [3] miniaturized/portable system, based on preconcentration in a MEMS (i.e. not in a glass or metal tube), injection in a GC MEMS column, and a detector (which may be of different types). This system allows the GC analysis of some samples at low concentration by means of the preconcentration step. The advantages of this solution are:
i. The preconcentrator makes it possible to analyze e.g. benzene up to concentrations of fractions of ppb;
ii. The MEMS preconcentrator may be heated very quickly, with ramps up to > 50°C/s, thus allowing a rapid preconcentrated injection without the need for cryogenic traps, i.e. devices suitable to concentrate the sample upstream the GC column through rapid thermal cycles: capturing the sample at cryogenic temperature (usually with the aid of liquid nitrogen or compressed gas expansion) and subsequent injection into the column through rapid heating.

The mini-GC system, which was developed as a highly application-specific device for the analysis of benzene in air, has, however, the main disadvantage that the injection circuit is implemented using miniaturized commercial solenoid valves, characterized by:
a. significant internal dead volumes, which worsen the quality of the injection due to sample dilution/diffusion, thus worsening the performance of the separation column;
b. impossibility of being used at temperatures above 60°C, which in principle prevents the analysis of samples with boiling temperatures above this temperature (thus preventing many applications other than benzene).

In addition to the aforementioned publication, there are others concerning preconcentration in GC technology, which also use MEMS technology, e.g. [4]-[6], but that share similar disadvantages.

Patent application WO2017180933A1 uses a preconcentrator and a separation column, but it is not easily miniaturizable and the injection is done with conventional valves, thus it is not possible to heat them to measure low volatile compounds, and the dead volumes of the valves used are also too elevated.

TZENG TE-HSUEN ET AL's publication [7] is similar to [3] when it states that a problem to be solved is that solenoid valves (electro-valves) that alone carry out the injection have large internal volumes and cannot be heated to perform the injection. Note that the solenoid valves in [7] carry out the injection.

The publication [8] of BYUNGHOON BAE ET AL and [9] of JUNGHOON YEOM ET AL present a device for gas-chromatography analysis wherein the injector and the preconcentrator are necessarily at the same temperature, as the MEMS injector is integrated in the preconcentrator (same chip). This is not optimal, as would instead be the case wherein the injector, the preconcentrator and the separation column are heatable in a fully independent manner. In effect, otherwise, as in the prior art analyzed, the following disadvantages arise:
- low volatile molecules (i.e. "high-boiling") condense inside the injector when it is not hot enough, enabling them to be to that end also the hottest element of the system;
- when the molecules condense inside the injector, they may not even reach the preconcentrator and therefore may not be measured or are measured in much lower concentrations;
- the molecules thus condensed and not measured are then released slowly and randomly in subsequent analyses, giving rise to erroneous measurements and memory effects from one measurement to the next.
- if the preconcentrator is not as cold as possible during the sampling step (preconcentration), it does not efficiently retain the molecules of the sample, whereas it should be warm during injection in order to rapidly release the molecules retained;
- if the separation column does not have a relatively low temperature at the moment of injection (i.e. when both the preconcentrator and the injector are hot), and then completes a controlled temperature ramp, lasting a few minutes, until it reaches the temperature of the injector, it is not possible to separate very different types sufficiently.

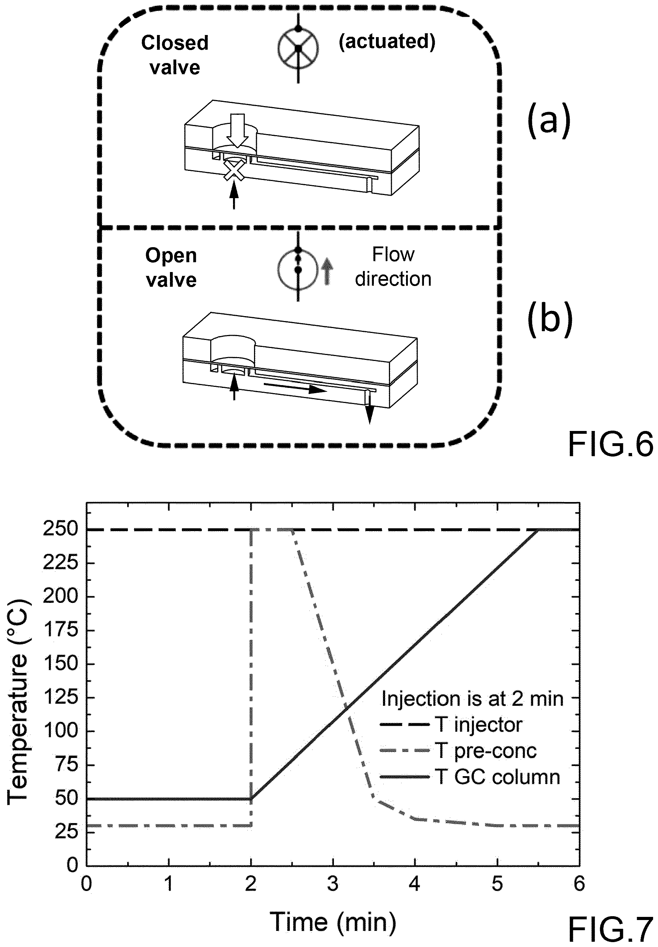

Fig. 7 illustrates by way of example the ideal temperature trends of the three components during an analysis step. These trends are not achievable with the prior art both for the aforementioned reasons and for problems of thermal transmission between two elements even when they are separated. For example, in the aforementioned publication [7] capillary tubes are used for the passage of the fluid between the components, which is disadvantageous for the following reasons:
- they are difficult, inconvenient and expensive to assemble;
- they are generally at room temperature, thus too cold, and again, if one wishes to analyze high-boiling substances, one may not use cold tubes, otherwise the substances condense inside the tubes. One might trivially think of heating the interconnecting tubes, but again a system of this type with heated tubes would be difficult, inconvenient and expensive to assemble; and
- the capillary tubes introduce significant dead volumes.

It should be stressed that it is not only a matter of providing heatable components and connections to avoid the disadvantages described, but rather of assembling the system so that it becomes productively and economically expedient.

### Object and subject-matter of the invention

The object of the present invention is to provide a miniaturized system for purge & trap preconcentration and subsequent (gas-)chromatography separation of sample mixtures, which solves all or part of the problems of the prior art.

It is a further object of the present invention to provide a method of gas-chromatography that solves all or part of the problems of the prior art.

A system and method of gas-chromatography according to the accompanying claims is the subject-matter of the present invention.

### Detailed description of the example embodiments of the invention

### List of figures

The invention will now be described for illustrative but non-restrictive purposes, with particular reference to the drawings of the accompanying figures, wherein:
- Figure 1 shows a diagram in lateral cross-section of an embodiment of the device according to the invention;
- Figure 2 shows a simplified diagram in lateral cross-section, with indication of the flows, in an embodiment according to the invention;
- Figure 3 shows a more detailed three-dimensional view of the device in Figure 1;
- Figure 4 shows a detailed functional diagram of the device according to Figure 3, in a first operating state of preconcentration;
- Figure 5 shows a detailed functional diagram of the device according to Figure 3, in a second operating state of GC analysis;
- Figure 6 shows the flow directions in an open (b) and closed (a) micro-valve in the device according to the invention; and
- Figure 7 illustrates the three desirable temperature trends in the three respective injector, preconcentrator and separation column components of the apparatus according to the invention.

It is specified here that elements of different embodiments may be combined together to provide additional embodiments without limits respecting the technical concept of the invention, as the person skilled in the art understands without difficulty from that which is described.

The present description also refers to the prior art for its implementation, with respect to detailed features not described, such as elements of minor importance usually used in the prior art in solutions of the same type.

When an element is introduced, it is always intended to mean "at least one" or "one or more".

When listing elements or features in this description, it is understood that the invention "comprises" or alternatively "is composed of" such elements.

### Embodiments

The invention concerns a miniaturized gas-chromatography system, based on MEMS components for the analysis of gaseous trace samples by means of purge & trap preconcentration with thermal desorption, wherein the following features may be understood individually and in any combination, respecting the technical concept of the invention.

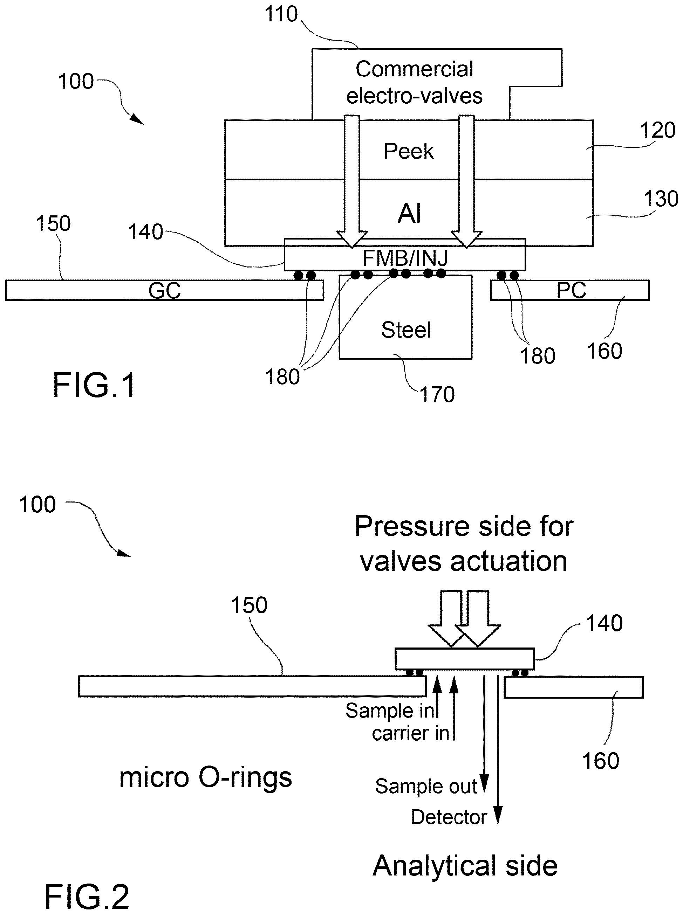

Referring to Fig.1, the gas-chromatography device 100, in a first embodiment according to the invention, comprises a chromatography column unit 150 and a preconcentrator 160 (also called "thermal desorption trap"). An injector unit 140 is assembled (e.g. in a bridge) between the two. The assembly is preferably carried out through O-rings 180 which are squeezed between two rigid parts in order to form fluidic connections (more generally any fluidic connector or coupling may be used, even means other than O-rings). In the part between the preconcentrator 160 and the gas-chromatography column 150, a fluidic head (or mechanical connection means) 170, preferably made of steel, faces the injector unit 140. Again, preferably, there is no direct contact between the fluidic head 170 and the injector unit 140; rather the contact occurs through O-rings 180.

The use of O-rings is not only to be considered as a fluidic interconnection method, but also allows the parts interconnected by the O-rings to be kept at different temperatures from each other, solving or helping to solve the problems of the prior art. An O-ring, in effect, allows for a temperature gradient between the parts that face the two sides of the O-ring, also facilitated by the presence of an air gap.

The separation column is a column preferably comprised in the group which includes: microfabricated packed GC columns, microfabricated semi-packed GC columns, microfabricated capillary GC columns, microfabricated multi-capillary GC columns, tubular porous layer GC columns and microfabricated GC columns based on ionic liquids.

The thermal desorption trap 160 may be filled with a suitable absorbent comprised in the set of porous polymers, graphitized carbons, molecular sieves, zeolite molecular sieves, or multiple bed sorbent traps based on sequences of any one of the aforementioned sorbents.

According to an advantageous embodiment, the thermal desorption trap and the chromatography separation column are both filled with graphitized carbons with different specific surfaces, therefore they are suitable for high temperature ramps in the presence of oxygen in the carrier gas and thus allow the use of purified air as carrier gas.

On the other side of the fluidic head 170 (side opposite to the injector 140), one or two layers of material 120,130 may be mounted as a medium between the injector unit 140 and the solenoid valves 110. A first layer 130 is preferably made of aluminum and serves as structural reinforcement and protection for a second layer 120, which is made of a heat-insulating material, so that the solenoid valves 110 do not heat up when in contact with the injector unit 140.

Referring to Fig. 2, the fluid flows inside the device 100 of the invention are shown. There are the inlet and outlet flows of the sample, the overpressure +dP of the carrier gas (corresponding in the figures to "carrier gas inlet"), the underpressure -dP (corresponding in the figures to "sample outlet") of the pump that aspirates the sample (or other sample handling means), as well as the outlet flow to the detector ("detector" in the figures, e.g. photo-ionization). Schematically, the overpressure +dP pushes the carrier gas into the gas-chromatography column 150; the gas then passes into the injector unit 140 and finally into the detector (one or more, not shown). This circuit is operated through the use of solenoid valves 110 which however open and close other pressure-operated on/off valves, better illustrated hereinafter.

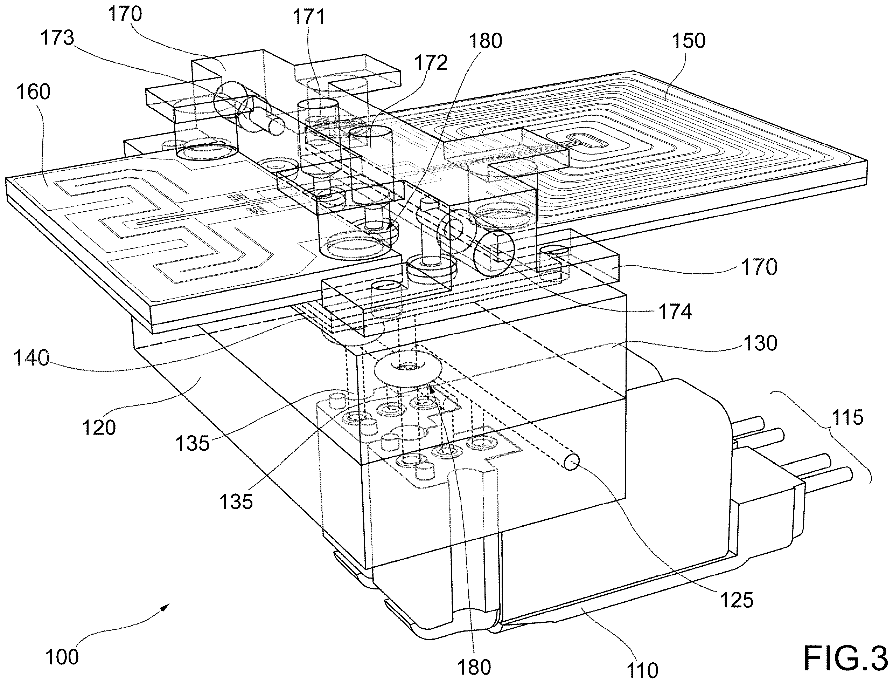

Referring now to Fig. 3, further details of the device are given, according to an embodiment of the invention.

The ducts that allow some of the various described flows are shown clearly. In particular, the sample inlet is indicated at 173, the overpressure +dP at 171, the underpressure -dP at 172, and the outlet to the detector at 174. In the thermally insulating layer 120, the inlet channel 125 of the actuation pressure is used. There are two other channels 135 between the solenoid valves 110 and the injector unit 140, which are actuation channels of the device (of the valves V1-V5, see below), which receive pressure from the channel 125. The channels 171-174 are advantageously made in the fluidic head 170, and this is preferably made of steel: in effect this material has a high degree of passivation (i.e. it is possible to passivate the surfaces of the channels, for example by vitrification processes, so that they become inert). The gas, entering in 173 is directed towards the injector, which distributes the flow through the actuation of the valves V1-V5.

The fluidic head 170 is a mechanical connection means between the injector, the preconcentrator and the separation column, which are mechanically independent (separated). It also guarantees the fluidic interconnection between the injector and the apparatuses upstream and downstream of the system.

According to an aspect of the invention, the preconcentrator 160, the chromatography separation column 150 and the injector 140 are connected fluidically through fluidic connectors 180 interposed on one side between said injector 140 and said preconcentrator 160 and on the other between said injector 140 and said chromatography separation column 150.

Finally, the solenoid valves 110 take electricity through wires 115.

Note that in the prior art [7] there are indeed solenoid valves, but they do not control other types of valves, since they carry out the injection directly. The fact of separating the control valves from the injection valves, together with the rest of the features of the system, is a specific arrangement of the present invention. This allows one to avoid the necessity of heating the solenoid valves that are only used with a control function.

Even though in the figures O-rings 180 are illustrated in the formation of some ducts, other means with the same function may be used in the device according to the invention. For example, gaskets or connections with metal alloys may be used, e.g. a fluidic connector based on soft metal (soft metallic seals). Fluidic connectors or sealing means will thus more generally refer to the O-rings or gaskets or other means.

It should also be noted that the gas-chromatography column 150, the preconcentrator 160 and the injection unit 140 are made as MEMS to provide a miniaturization to the device. In particular, the injection unit 140 works both as an injector and as a fluidic manifold (connection) to be interconnected to the preconcentrator and to the gas-chromatography column, in order to minimize dead volumes while allowing keeping the entire analytical circuit penetrated by the sample at high temperatures (since MEMS valves are resistant to high temperatures), and thus to optimize the analytical performance.

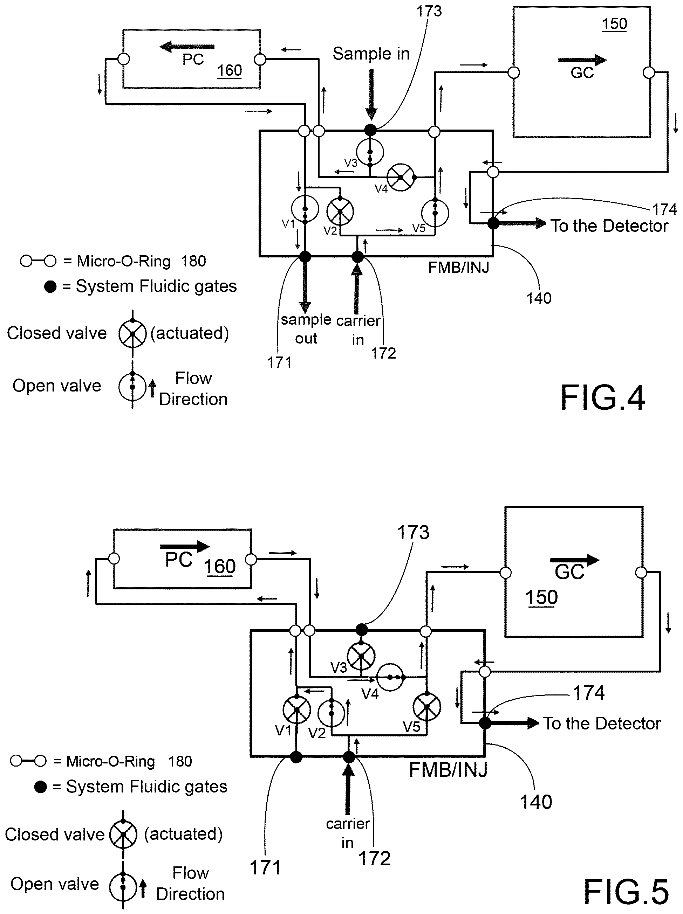

Referring now to Fig. 4 and 5, the functional circuit of the device according to the invention is shown. In the specific example five on/off valves are illustrated, but there may be more than five. These valves V1-V5 are preferably all in the injection unit 140.

The circuit in the state shown in Fig. 4 has three valves open and two closed, in order to create, due to the underpressure -dP present at the sample outlet, a flow into the preconcentrator 160 so that the analytes are concentrated there. The gas-chromatography column is however affected by a flow controlled by the overpressure +dP present at the inlet of the carrier gas, otherwise it may be subject to contamination.

At the end of this process, the closing/opening of the valves is reversed, so that from the preconcentrator suitably heated for the release of the sample, the gas, pushed by the overpressure +dP present at the entrance of the carrier gas, passes to the gas-chromatography column 150 and thus to the detector (not shown) . The MEMS valves are controlled by the solenoid valve group 110. Fig. 6 illustrates the operation of the MEMS valves. These on/off valves are preferably polymeric micro-diaphragms obtained between two silicon wafers.

The two pumps (or more generally gas handling or pressure creating means) for overpressure and underpressure are preferably different.

According to a different embodiment of the present invention, the preconcentrator 160 is in thermal connection or integrates (constructing them e.g. as MEMS) one or more heaters and one or more temperature sensors (not shown) . The same may be provided for the chromatography column and for the injector. "Thermal connection" means any connection (by contact, radiant, etc.; internal or external) capable of conveying heat from the heater to the heated element (preconcentrator and chromatography column).

According to one aspect of the invention, a heater may also be provided for the fluidic head 170. For example, one could use Kapton/Copper electric heaters, but one could also use simple resistance heaters or armored heater plugs. At this point, it may be assumed that the MEMS injector chip 140 will be heated by irradiation from the fluidic head 170, which is very close thereto.

However, it is possible to add an additional Kapton/Copper film heater to directly heat the MEMS injector chip 140, positioned between the MEMS 140 and the block made of PEEK 120 (generally an insulating material), or a heater integrated in the same injector 140, as is done for the preconcentrator 160 and the chromatography column 150.

According to one aspect of the present invention, the system may comprise a sampling loop in the injector 140 to allow the use of either a thermal desorption trap or a sampling loop. In effect, if it is necessary to analyze a high concentration sample and it is not necessary to enrich the sample through the preconcentration process; loop injection could be used, which guarantees faster analysis (not requiring additional preconcentration and release cycles) and more precisely controlled volumetric injections.

It should be noted here that in the prior art there is no passage between the preconcentrator and gas-chromatography column with pressure-actuated on-off valves. Moreover, the valves are not all inserted in a single component as in the present invention.

The fact that in the present invention the circuit valves have been decoupled from the solenoid valves makes it possible to work at high temperature. It is thus possible to keep the MEMS injector at temperatures up to 250°C to avoid the condensation of high-boiling molecules, while implementing an injection system with near-zero dead volume. This makes the gas chromatography system general-purpose, unlike that described in [3] which was specific for the BTEX sample (benzene, toluene, ethylbenzene and xylene), which does not have condensation problems, or in [7], which is a system not suitable for the analysis of high-boiling substances.

Moreover, the fact that, unlike the injection of a loop, a MEMS preconcentrator is used, has the advantage of increasing the sensitivity.

Another characteristic of the system of the invention is that the MEMS injector acts as a "microfluidic manifold" (which could also be called "pneumatic motherboard" or "microfluidic motherboard") to interconnect the MEMS preconcentrator to the GC MEMS column, thus creating a set of 3 interconnected MEMS directly facing each other (e.g. through micro-O-rings), without the aid of additional components such as tubes/capillaries/manifolds. This makes it possible to create an extremely compact GC module, to further reduce dead volumes and thus improve the quality of gas-chromatography analysis and to keep the entire analytical chain at high working temperatures with a reduced energy consumption.

The detector is not specific to the present invention, as it could be any type of detector used in GC; only TCD (Thermal Conductivity Detector), PID (Photoionization Detector), FID (Flame Ionization Detector), ECD (Electron Capture Detector), PDD (Pulsed Discharge Detector), MOX (Metal Oxide Detector), IMS (Ion Mobility Spectrometer Detector), MS (Mass Spectrometer Detector), IRAS (Infrared Absorption Detector), photoacoustic detectors, and electrochemical sensors are cited by way of example.

The system according to the invention may be used, according to the applications, with GC MEMS columns of different kinds (capillaries, packed), that use inert carrier gases from cylinders (e.g. nitrogen, helium) or generated independently (e.g. hydrogen by electrolysis), or in some cases with simple filtered air.

The system according to the invention, comprising 3 MEMS (preconcentrator, microfluidic injector/manifold, GC column), solenoid valves (which are used only for the pressure actuation of the injection valves), mounting supports, heaters, etc., measures only a few cubic centimeters.

The system according to the invention may be used according to the following steps:
- actuating said series of solenoid valves 110 so as to open and close the valves of said series of valves V1, V2, V3, V4, V5 in order to achieve a first state wherein said sample is made to flow in said preconcentrator 160 so as to store therein said at least one analyte, and at the same time said carrier gas is made to flow through the separation column;
- adjusting the temperature of said injector 140 through said one or more injector heaters to a temperature such as to avoid the condensation of high-boiling molecules;

- adjusting the temperature of said preconcentrator 160 through said one or more preconcentrator heaters and said one or more preconcentrator temperature sensors;
- actuating said series of solenoid valves 110 in order to open and close the valves of said series of valves V1, V2, V3, V4, V5 to achieve a second state wherein the carrier gas is used to make said at least one analyte to flow from said preconcentrator 160 to said chromatography separation column 150 and finally to said detector;
- adjusting the temperature of the chromatography separation column 150 through said one or more separation column heaters and one or more separation column temperature sensors (this adjustment may also be partially superimposed on the step leading to the second state); and
- actuating said at least one detector and detecting the concentration of said at least one analyte.

The way in which the temperature in the two steps listed above is regulated, in order to obtain the gas-chromatography analysis, is known per se. However, according to the present invention, the heaters of the injector, of the preconcentrator and of the separation column in a miniaturized device are actuated independently as described above. In this regard, reference is made to Fig. 7, wherein three exemplifying desirable temperature trends in the three respective injector, preconcentrator and separation column components are illustrated. Due to the independent actuation of the three heaters, these trends are easily obtainable according to the invention, which is a miniaturized apparatus.

In a further non-illustrated embodiment of the present invention, an analysis system is provided with a first and second microfabricated gas-chromatography column in GCxGC configuration, as well as a microfabricated modulator injector.

The modulator may implement two states of the fluid system, where:
- in the first state of the fluid system, the modulator implements a first fluidic circuit wherein the separated sample eluted by the first GC column is accumulated within a micro-fluidic circuit (microfluidic loop) while the second GC column elutes a sample using a pressure difference of the carrier gas;
- in the second state of the fluidic system, the modulator injects the eluted sample of the micro-fluidic loop into the second GC column by means of a pressure difference in the carrier gas.

The two states are still implemented by the modulator through a series of microfabricated valves, wherein, again, the injector chip also acts as a pneumatic manifold directly connecting the two GC columns.

### Advantages and applications of the invention

The invention allows, among other things, for the extreme miniaturization of a system for the purge & trap preconcentration and the subsequent (gas-)chromatography separation of sample mixtures, thus permitting high sensitivity and high selectivity to be obtained. The "all-MEMS" construction of the system, unlike the state of the art, allows one to work at higher temperatures, since all the components penetrated by the sample are silicon-based and therefore resistant to high temperatures. This also allows the analysis of high-boiling substances.

The injector, the preconcentrator and the separation column follow independent and separate thermal trends, thus avoiding the problem of condensed and unanalyzed molecules and optimizing the efficiency and reliability of the analysis. Moreover, this is achieved without the use of interconnecting tubes and capillaries with the following advantages:
- functional: lower dead volumes, absence of cold ducts;
- simplicity and reliability of assembly;
- lower number of additional components (and therefore fewer cold spots); and
- finally, smaller dimensions.

The invention may be used in the following fields, listed by way of non-exhaustive example: field analysis of complex samples; safety & security (explosives, CBRNe), industrial monitoring, monitoring of environments hazardous to the health of operators, biomedical analysis (e.g. breath analysis), environmental/air quality, indoor air quality, agro-food, monitoring of industrial processes, energy and natural gas (odorant quantification).

### Bibliography

[1] https://www.vici.com/vval/vval.php
[2] Sensors and Actuators A Physical 115 (2004): 318-330 doi: 10.1016/j.sna.2004.04.028
[3] S. Zampolli et al., "Real-time monitoring of sub-ppb concentrations of aromatic volatiles with a MEMS-enabled miniaturized gas-chromatograph", Sensors and Actuators B: Chemical 141 (2009) 322-328
[4] http://www.sandia.gov/mstc/_assets/documents/Fact_Sheet s/sensors/MicroChemLab.pdf http://www.sandia.gov/mems/_assets/documents/Fact_Sheet s/sensors/MicroChemLab-Preconcentrator.pdf
[5] James et al., "Development of a MEMS preconcentrator for Micro-Gas Chromatography Analyses", Procedia Engineering 87 (2014) 500-503
[6] Bhushan et al., "Fabrication of micro-gas chromatograph columns for fast Chromatography", Microsyst Technol (2007) 13: 361-368
[7] TZENG TE-HSUEN ET AL, "A Portable Micro Gas Chromatography System for Lung Cancer Associated Volatile Organic Compound Detection", IEEE JOURNAL OF SOLID-STATE CIRCUITS, IEEE SERVICE CENTER, PISCATAWAY, NJ, USA, vol. 51, no. 1, 1 January 2016 (2016-01-01), pages 259-272, XP011596423, ISSN: 0018-9200, D01: 10.1109/JSSC.2015.2489839
[8] di BYUNGHOON BAE ET AL: "A Fully-Integrated MEMS Preconcentrator for Rapid Gas Sampling", SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10 June 2007 (2007-06-10), pages 1497-1500, XP031216328, ISBN: 978-1-4244-0841-2
[9] JUNGHOON YEOM ET AL: "The design, fabrication and characterization of a silicon microheater for an integrated MEMS gas preconcentrator", JOURNAL OF MICROMECHANICS & MICROENGINEERING, INSTITUTE OF PHYSICS PUBLISHING, BRISTOL, GB, vol. 18, no. 12, 1 December 2008 (2008-12-01), page 125001, XP020145054, ISSN: 0960-1317, DOI: 10.1088/0960-1317/18/12/125001

In the foregoing, the preferred embodiments have been described and variants of the present invention have been suggested, but it is to be understood that the persons skilled in the art will be able to make modifications and changes without departing from the related scope of protection, as defined by the accompanying claims.

## Claims

1. A gas-chromatography analysis system (100) for the analysis of a test sample containing at least one analyte, comprising means for handling a carrier gas, a MEMS injector (140) in thermal connection with one or more injector heaters and one or more injector temperature sensors, as well as at least one detector of said at least one analyte, wherein on a first side of said MEMS injector (140) the following are fluidically connected to the MEMS injector by respective fluidic connections:
- a MEMS preconcentrator (160), in thermal connection with one or more preconcentrator heaters and one or more preconcentrator temperature sensors;
- a MEMS chromatography separation column (150), in thermal connection with one or more separation column heaters and one or more separation column temperature sensors;
- a fluidic head (170) mechanically interconnecting the injector (140), the preconcentrator (160) and the separation column (150), which are mechanically independent and thermally separated, the fluidic head (170) comprising a series of channels (171, 172, 173, 174) configured to allow the flow of the carrier gas and/or the sample to be analyzed towards the injector (140) and from there towards the preconcentrator (160) and/or towards the chromatography separation column (150) and/or towards said at least one detector;
wherein:
- the respective fluidic connections are sealing means (180) interposed between said MEMS injector (140) and said MEMS preconcentrator (160) and between said MEMS injector (140) and said MEMS chromatography separation column (150);
- said MEMS injector (140) comprises a series of MEMS on-off valves (V1, V2, V3, V4, V5) positioned at respective points of said injector (140) configured and adapted to:
∘ in a first state, make said sample to be analyzed to flow into said preconcentrator (160) in such a way that said at least one analyte is stored therein, and at the same time make said carrier gas to flow through the separation column;
∘ in a second state, use the carrier gas to make said at least one analyte to flow from said preconcentrator (160) to said chromatography separation column (150) and finally to said detector;
wherein on a second side of said MEMS injector (140), opposed to the first side, the following are provided in a successive order from the MEMS injector:
- a heat-insulating material spacer (120);
- a series of solenoid valves (110) configured to control said series of valves (V1, V2, V3, V4, V5).

2. A system (100) according to claim 1, wherein a structural reinforcement and protection layer (130) is interposed between said heat-insulating material spacer (120) and the series of valves (V1, V2, V3, V4, V5).

3. A system according to claim 2, wherein the structural reinforcement and protection layer (130) is a metal spacer.

4. A system (100) according to any claim 1 to 3, wherein said heat-insulating material (120) is PEEK.

5. A system (100) according to one or more of claims 1 to 4, wherein said fluidic head (170) is made of steel.

6. A system (100) according to one or more of claims 1 to 5, wherein said sealing means are O-rings (180).

7. A system (100) according to one or more of the preceding claims, wherein between the solenoid valves (110) and said injector (140) a series of actuation channels (135) extends, configured and suitable to actuate said series of valves (V1, V2, V3, V4, V5) through pressure.

8. A system (100) according to one or more of the preceding claims, wherein said series of valves (V1, V2, V3, V4, V5) comprises at least 5 valves, three valves being open and two closed in said first state, and vice versa in said second state.

9. A system (100) according to one or more of the preceding claims, wherein said preconcentrator (160) integrates, in particular as MEMS, said one or more preconcentrator heaters and said one or more preconcentrator temperature sensors, and said separation column (150) integrates, in particular as MEMS, said one or more separation column heaters and said one or more separation column sensors.

10. A system (100) according to one or more of the preceding claims, wherein said injector (140) integrates, in particular as MEMS, said one or more injector heaters and said one or more injector temperature sensors.

11. A system (100) according to one or more of the preceding claims, wherein said injector (140) comprises a sampling loop from which said sample is taken, connected so that, when used, it excludes said preconcentrator (160).

12. A gas-chromatography analysis method, comprising the execution of the following steps:
A. providing a gas-chromatography analysis system (100) as defined in one or more of the claims from 1 to 11;
B. actuating said series of solenoid valves (110) so as to open and close the valves of said series of valves (V1, V2, V3, V4, V5) to achieve said first state;
C. adjusting the temperature of said injector (140) through said one or more injector heaters to a temperature such as to avoid the condensation of high-boiling molecules;
D. adjusting the temperature of said preconcentrator (160) by means of said one or more preconcentrator heaters and said one or more preconcentrator temperature sensors;
E. actuating said series of solenoid valves (110) so as to open and close the valves of said series of valves (V1, V2, V3, V4, V5) to achieve said second state;
F. adjusting the temperature of said chromatography separation column (150) by means of said one or more separation column heaters and one or more separation column temperature sensors; and
G. actuating said at least one detector and detecting the concentration of said at least one analyte.

## Patentansprüche

1. Gaschromatografie-Analysesystem (100) zur Analyse einer Testprobe, die mindestens einen Analyten enthält, das Einrichtungen zum Handhaben eines Trägergases, einen MEMS-Injektor (140) in thermischer Verbindung mit einem oder mehreren Injektorheizungen und einem oder mehreren Injektortemperatursensoren sowie mindestens einen Detektor des mindestens einen Analyten umfasst, wobei auf einer ersten Seite des MEMS-Injektors (140) Folgendes durch entsprechende fluidische Verbindungen mit dem MEMS-Injektor fluidisch verbunden ist:
- ein MEMS-Vorkonzentrator (160) in thermischer Verbindung mit einer oder mehreren Vorkonzentratorheizungen und einem oder mehreren Vorkonzentratortemperatursensoren;
- eine MEMS-Chromatografie-Trennsäule (150) in thermischer Verbindung mit einer oder mehreren Trennsäulenheizungen und einem oder mehreren Trennsäulentemperatursensoren;
- ein fluidischer Kopf (170), der den Injektor (140), den Vorkonzentrator (160) und die Trennsäule (150) mechanisch miteinander verbindet, die mechanisch unabhängig und thermisch getrennt sind, wobei der fluidische Kopf (170) eine Reihe von Kanälen (171, 172, 173, 174) umfasst, die konfiguriert sind, um den Strom des Trägergases und/oder der zu analysierenden Probe in Richtung des Injektors (140) und von dort in Richtung des Vorkonzentrators (160) und/oder in Richtung der Chromatografie-Trennsäule (150) und/oder in Richtung des mindestens einen Detektors zu ermöglichen;
wobei:
- die jeweiligen fluidischen Verbindungen Dichtungseinrichtungen (180) sind, die zwischen dem MEMS-Injektor (140) und dem MEMS-Vorkonzentrator (160) sowie zwischen dem MEMS-Injektor (140) und der MEMS-Chromatografie-Trennsäule (150) angeordnet sind;
- der MEMS-Injektor (140) eine Reihe von MEMS-Ein/Aus-Ventilen (V1, V2, V3, V4, V5) umfasst, die an jeweiligen Punkten des Injektors (140) positioniert sind, konfiguriert, und angepasst, um:
o in einem ersten Zustand die zu analysierende Probe so in den Vorkonzentrator (160) strömen zu lassen, dass der mindestens eine Analyt darin gespeichert wird, und gleichzeitig das Trägergas durch die Trennsäule strömen zu lassen;
o in einem zweiten Zustand das Trägergas zu verwenden, um den mindestens einen Analyten vom Vorkonzentrator (160) zur Chromatografie-Trennsäule (150) und schließlich zum Detektor strömen zu lassen;
wobei auf einer zweiten Seite des MEMS-Injektors (140) gegenüber der ersten Seite Folgendes in aufeinanderfolgender Reihenfolge vom MEMS-Injektor bereitgestellt wird:
- ein Abstandshalter (120) aus wärmeisolierendem Material;
- eine Reihe von Magnetventilen (110), die konfiguriert sind, um die Reihe von Ventilen (V1, V2, V3, V4, V5) zu steuern.

2. System (100) nach Anspruch 1, wobei eine strukturelle Verstärkungs- und Schutzschicht (130) zwischen dem Abstandshalter (120) aus wärmeisolierendem Material und der Reihe von Ventilen (V1, V2, V3, V4, V5) angeordnet ist.

3. System nach Anspruch 2, wobei die strukturelle Verstärkungs- und Schutzschicht (130) ein Metallabstandshalter ist.

4. System (100) nach einem der Ansprüche 1 bis 3, wobei das wärmeisolierende Material (120) PEEK ist.

5. System (100) nach einem oder mehreren der Ansprüche 1 bis 4, wobei der fluidische Kopf (170) aus Stahl besteht.

6. System (100) nach einem oder mehreren der Ansprüche 1 bis 5, wobei die Dichtungseinrichtungen O-Ringe (180) sind.

7. System (100) nach einem oder mehreren der vorhergehenden Ansprüche, wobei sich zwischen den Magnetventilen (110) und dem Injektor (140) eine Reihe von Betätigungskanälen (135) erstreckt, die konfiguriert und geeignet sind, um die Reihe von Ventilen (V1, V2, V3, V4, V5) durch Druck zu betätigen.

8. System (100) nach einem oder mehreren der vorhergehenden Ansprüche, wobei die Reihe von Ventilen (V1, V2, V3, V4, V5) mindestens 5 Ventile umfasst, im ersten Zustand drei Ventile offen und zwei geschlossen sind, und umgekehrt im zweiten Zustand.

9. System (100) nach einem oder mehreren der vorhergehenden Ansprüche, wobei der Vorkonzentrator (160) insbesondere als MEMS die eine oder mehreren Vorkonzentratorheizungen und den einen oder die mehreren Vorkonzentratortemperatursensoren integriert und die Trennsäule (150), insbesondere als MEMS, die eine oder mehreren Trennsäulenheizungen und den einen oder die mehreren Trennsäulensensoren integriert.

10. System (100) nach einem oder mehreren der vorhergehenden Ansprüche, wobei der Injektor (140), insbesondere als MEMS, die eine oder mehreren Injektorheizungen und den einen oder die mehreren Injektortemperatursensoren integriert.

11. System (100) nach einem oder mehreren der vorhergehenden Ansprüche, wobei der Injektor (140) eine Probenahmeschleife umfasst, aus der die Probe entnommen wird, die so angeschlossen ist, dass sie bei Verwendung den Vorkonzentrator (160) ausschließt.

12. Gaschromatografie-Analyseverfahren, das die Durchführung der folgenden Schritte umfasst:
A. Bereitstellen eines Gaschromatografie-Analysesystems (100), wie in einem oder mehreren der Ansprüche 1 bis 11 definiert;
B. Betätigen der Reihe von Magnetventilen (110), um die Ventile der Reihe von Ventilen (V1, V2, V3, V4, V5) zu öffnen und zu schließen, um den ersten Zustand zu erreichen;
C. Einstellen der Temperatur des Injektors (140) durch die eine oder mehreren Injektorheizungen auf eine Temperatur, um die Kondensation hochsiedender Moleküle zu vermeiden;
D. Einstellen der Temperatur des Vorkonzentrators (160) mittels der einen oder der mehreren Vorkonzentratorheizungen und des einen oder der mehreren Vorkonzentratortemperatursensoren;
E. Betätigen der Reihe von Magnetventilen (110), um die Ventile der Reihe von Ventilen (V1, V2, V3, V4, V5) zu öffnen und zu schließen, um den zweiten Zustand zu erreichen;
F. Einstellen der Temperatur der Chromatografie-Trennsäule (150) mittels der einen oder mehreren Trennsäulenheizungen und eines oder mehrerer Trennsäulentemperatursensoren; und
G. Betätigen des mindestens einen Detektors und Erfassen der Konzentration des mindestens einen Analyten.

## Revendications

1. Système d'analyse par chromatographie en phase gazeuse (100) permettant l'analyse d'un échantillon d'essai contenant au moins un analyte, comprenant des moyens de manipulation d'un gaz porteur, un injecteur de MEMS (140) en connexion thermique avec un ou plusieurs éléments chauffants d'injecteur et un ou plusieurs capteurs de température d'injecteur, ainsi qu'au moins un détecteur dudit au moins un analyte, sur un premier côté dudit injecteur de MEMS (140), les éléments suivants étant reliés fluidiquement à l'injecteur de MEMS par des raccordements fluidiques respectifs :
- un préconcentrateur de MEMS (160), en connexion thermique avec un ou plusieurs éléments chauffants de préconcentrateur et avec un ou plusieurs capteurs de température de préconcentrateur ;
- une colonne de séparation par chromatographie de MEMS (150), en connexion thermique avec un ou plusieurs éléments chauffants de colonne de séparation et avec un ou plusieurs capteurs de température de colonne de séparation ;
- une tête fluidique (170), reliant mécaniquement l'injecteur (140), le préconcentrateur (160) et la colonne de séparation (150), mécaniquement indépendants et thermiquement séparés, la tête fluidique (170) comprenant une série de canaux (171, 172, 173, 174) conçus pour permettre l'écoulement du gaz porteur et/ou de l'échantillon à analyser vers l'injecteur (140) et de là vers le préconcentrateur (160) et/ou vers la colonne de séparation chromatographique (150) et/ou vers ledit au moins un détecteur ;
dans lequel :
- les raccordements fluidiques respectifs sont des moyens d'étanchéité (180) interposés entre ledit injecteur de MEMS (140) et ledit préconcentrateur de MEMS (160) d'une part et entre ledit injecteur de MEMS (140) et ladite colonne de séparation par chromatographie de MEMS (150) d'autre part ;
- ledit injecteur de MEMS (140) comprend une série de vannes tout ou rien de MEMS (V1, V2, V3, V4, V5) positionnées en des points respectifs dudit injecteur (140) et conçues et adaptées :
o dans un premier état, pour faire circuler ledit échantillon à analyser dans ledit préconcentrateur (160) afin que ledit au moins un analyte y soit stocké et en même temps pour faire circuler ledit gaz porteur à travers la colonne de séparation ;
o dans un second état, pour utiliser le gaz porteur pour faire circuler ledit au moins un analyte du préconcentrateur (160) à ladite colonne de séparation chromatographique (150) et enfin audit détecteur ;
sur un second côté dudit injecteur de MEMS (140), opposé au premier côté, les éléments suivants étant prévus dans un ordre successif à partir de l'injecteur de MEMS :
- un espaceur en matériau calorifuge (120) ;
- une série d'électrovannes (110), conçues pour contrôler ladite série de vannes (V1, V2, V3, V4, V5).

2. Système (100) selon la revendication 1, dans lequel une couche de renforcement structural et de protection (130) est interposée entre ledit espaceur en matériau calorifuge (120) et la série de vannes (V1, V2, V3, V4, V5).

3. Système selon la revendication 2, dans lequel la couche de renforcement structural et de protection (130) est une entretoise métallique.

4. Système (100) selon l'une quelconque des revendications 1 à 3, dans lequel ledit matériau calorifuge (120) est du PEEK.

5. Système (100) selon une ou plusieurs des revendications 1 à 4, dans lequel ladite tête fluidique (170) est en acier.

6. Système (100) selon une ou plusieurs des revendications 1 à 5, dans lequel lesdits moyens d'étanchéité sont des joints toriques (180).

7. Système (100) selon une ou plusieurs des revendications précédentes, dans lequel entre les électrovannes (110) et ledit injecteur (140) s'étend une série de canaux d'actionnement (135), conçus et adaptés pour actionner ladite série de vannes (V1, V2, V3, V4, V5) par pression.

8. Système (100) selon une ou plusieurs des revendications précédentes, dans lequel ladite série de vannes (V1, V2, V3, V4, V5) comprend au moins 5 vannes, dont trois sont ouvertes et deux fermées dans ledit premier état et vice versa dans ledit second état.

9. Système (100) selon une ou plusieurs des revendications précédentes, dans lequel ledit préconcentrateur (160) intègre, notamment sous forme de MEMS, ledit un ou plusieurs éléments chauffants de préconcentrateur et ledit un ou plusieurs capteurs de température de préconcentrateur et où ladite colonne de séparation (150) intègre, notamment sous forme de MEMS, le(s)dit(s) élément(s) chauffant(s) de colonne de séparation et le(s)dit(s) capteur(s) de colonne de séparation.

10. Système (100) selon une ou plusieurs des revendications précédentes, dans lequel ledit injecteur (140) intègre, notamment sous forme de MEMS, le(s)dit(s) plusieurs éléments chauffants d'injecteur et le(s)dit(s) capteur(s) de température d'injecteur.

11. Système (100) selon une ou plusieurs des revendications précédentes, dans lequel ledit injecteur (140) comprend une boucle d'échantillonnage où est prélevé ledit échantillon, connectée afin que, en cours d'utilisation, elle exclue ledit préconcentrateur (160).

12. Méthode d'analyse par chromatographie en phase gazeuse, comprenant l'exécution des étapes suivantes :
A. la fourniture d'un système d'analyse par chromatographie en phase gazeuse (100) selon une ou plusieurs des revendications 1 à 11 ;
B. l'actionnement de ladite série d'électrovannes (110) afin d'ouvrir et de fermer les vannes de ladite série de vannes (V1, V2, V3, V4, V5) pour atteindre ledit premier état ;
C. le réglage de la température dudit injecteur (140) à travers lesdits un ou plusieurs éléments chauffants d'injecteur à une température telle qu'elle évite la condensation de molécules à point d'ébullition élevé ;
D. le réglage de la température dudit préconcentrateur (160) par un ou plusieurs éléments chauffants du préconcentrateur et desdits un ou plusieurs capteurs de température du préconcentrateur ;
E. l'actionnement de ladite série d'électrovannes (110) afin d'ouvrir et de fermer les vannes de ladite série de vannes (V1, V2, V3, V4, V5) pour atteindre ledit second état ;
F. le réglage de la température de ladite colonne de séparation par chromatographie (150) par lesdits un ou plusieurs éléments chauffants de colonne de séparation et par un ou plusieurs capteurs de température de colonne de séparation ; et
G. l'actionnement dudit au moins un détecteur et la détection de la concentration dudit au moins un analyte.
